# EUROPEAN PATENT APPLICATION

(11) **EP 0 892 400 A2**
(43) Date of publication of application: **20.01.1999**
(21) Application number: 98304912.3
(22) Date of filing: 23.06.1998
(51) Int. Cl.: G11B 15/52

(54) **Capstanless tape recording apparatus and recording method using the same**

(30) Priority: 15.07.1997 JP 189883/97
(71) Applicant: ALPS ELECTRIC CO., LTD., Ota-ku Tokyo 145 (JP)
(72) Inventor: Tanaka, Masanobu, Furukawa-shi, Miyagi-ken (JP); Yamashita, Tatsumaro, Shibata-gun, Miyagi-ken (JP)
(74) Representative: Kensett, John Hinton

(57) **Abstract**

Described herein are a capstanless tape recording apparatus and a recording method using the same. An input signal (analog signal) is first converted into a data signal by an AID converter (13) based on a sampling frequency generated by first signal generating means (crystal oscillator) (12). Thereafter, the data signal is re-converted into a recording signal (analog signal) by a D/A converter (9) based on control clocks generated by second signal generating means, which in turn is recorded on a recording tape through a head. Since each control clock referred to above is time-base modulated while following an error signal detected by a TSS, the D/A converted recording signal will also result in a time-base modulated one. Thus, since the recording signal is modulated in accordance with error components upon recording, high-accuracy recording is allowed.

## Description

The present invention relates to a tape recording apparatus free from the use of a capstan, and particularly to a capstanless tape recording apparatus capable of implementing, at low cost, a reduction in the influence of wow and flutter or the like produced while a tape is running and high-quality recording, and a recording method using the same.

### Description of the Related Art:

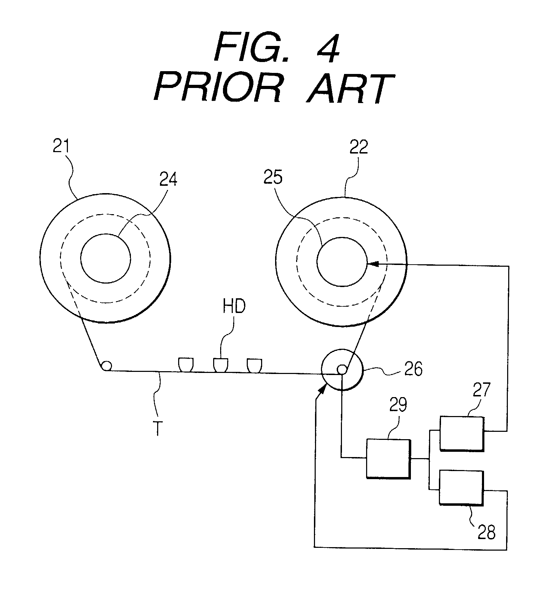

Fig. 4 is a block diagram showing a conventional capstanless tape apparatus.

This type of capstanless tape apparatus is provided with a supply reel 21 and a take-up reel 22. A recording tape T is capable of running by rotating and driving the take-up reel 22 with a take-up reel motor 25. The recording tape T runs while sliding on a head HD and rotates a detection roller 26. The detection roller 26 is a kind of speed sensor, which outputs a signal corresponding to a variation in the running speed of recording tape T.

This signal is compared with a predetermined speed by an externally-provided comparator 29 from which an error produced therebetween is detected as an error signal. The error signal is amplified by an amplifier 27 and thereafter supplied to the take-up reel motor 25, so that the rotational speed of the take-up reel motor 25 is controlled.

The error signal is also amplified by an amplifier 28 from which the amplified signal is supplied to brake means (not shown) mounted to the detection roller 26, whereby a brake is applied to the detection roller 26. The recording tape T is controlled by such a means so that it is capable of running at a constant speed as a whole.

Upon reverse running, the rotation of a supply reel motor 24 is controlled in the same manner as described above.

However, the capstanless tape apparatus controlled in the above-described manner has problems shown below.

A first problem is as follows: When the take-up reel motor 25 is decelerated or accelerated or the brake is applied to the detection roller 26 although the capstanless tape apparatus keeps the running speed of the tape constant as a whole, a portion in which the running speed is not held constant, will occur. There may be cases in which since the recording is not accurately made to that portion when the normal recording is made to this portion, the original sound cannot be faithfully reproduced when the recording is played back later.

Particularly when a digital signal such as a program or data for a computer is recorded on a recording tape, an extremely-high reproduction rate is required. It is also necessary to faithfully play back or reproduce the program or the like. However, since the conventional apparatus encounters difficulties in uniformly maintaining wow and flutter as well as a tape speed during recording, the digital signal cannot be accurately recorded over the entire recording tape T. Further, there is a limit to the use of the tape apparatus as a high-compatible data recorder for the creation of a master tape, for example.

A second problem is as follows: When, for example, a recording tape is switched from an A surface to a B surface where the capstanless tape apparatus is auto-reversed, the head is reversed and the running direction of the recording tape T is reversed. Further, since the tape speed is unstable immediately after its reversion, a blank portion on which no input signal is recorded, is produced. Thus, since the continuous recording signal is partially missed and thereby a portion (time lag) properly unrecorded on the recording tape T is produced, a problem arises in that the recording accuracy of the capstanless tape apparatus itself is impaired.

A third problem is as follows: When a user normally pushes a recording button, the recording tape T starts running so that the detection roller 26 is rotated. Afterward, a motor's servo system functions based on a signal outputted from the detection roller 26. However, when the recording signal is recorded on the recording tape T before this type of servo system functions completely, a recording signal, which is not clear in meaning (undecodable), will be recorded thereon. Namely, the conventional capstanless tape apparatus has a problem that a recording non-insurance portion unable to ensure a recording signal at startup is formed.

A fourth problem is as follows: In order to provide a capstanless tape apparatus capable of solving the aforementioned problems and providing high-quality recording, the prior art has placed emphasis on the structural standpoint and pursued finished accuracy and assembly accuracy of each member. Therefore, there was a limit to a reduction in the manufacturing cost.

The present invention relates to a tape recording apparatus free from the use of a capstan. An object of this invention is particularly to provide a capstanless tape recording apparatus capable of implementing, at low cost, a reduction in the influence of wow and flutter or the like produced during tape running and high-quality recording, and a recording method using the same.

According to one aspect of this invention, for achieving the above object, there is provided a capstanless tape recording apparatus comprising:
a servo system of a motor for feeding back an output produced from a tape speed sensor to thereby control the rotation of a tape;
first signal generating means for generating a reference clock;
second signal generating means for generating a plurality of control clocks different in frequency from one another from the output of the tape speed sensor;
an A/D converter for A/D converting an input signal using the reference clock generated from the first signal generating means;
a memory controller for controlling the A/D converted digital signal;
a memory for storing the digital signal therein;
a D/A converter for controlling the memory controller using the control clocks to thereby re-convert the digital signal into an analog signal; and
a recording head for amplifying an output supplied from the D/A converter and thereafter writing the amplified output onto the recording tape.

It is preferable that a signal outputted from the tape speed sensor is subjected to multiplication to thereby generate control clocks from the second signal generating means.

In the above invention, preferably, the control clocks generated from the second signal generating means are time-base modulated according to a variation in the speed of the tape and when the input signal is re-converted into an analog signal using the control clocks after the A/D conversion of the input signal by the reference clock, the input signal is time-base modulated according to error components produced upon running of the tape and thereafter recorded on the tape.

Preferably, a digital signal processor is used in place of the D/A converter so that a digital signal is time-base modulated based on control clocks generated by the second signal generating means and thereafter recorded on the tape.

According to another aspect of this invention, for achieving the above object, there is provided a recording method using a capstanless tape recording apparatus, comprising a servo system of a motor for feeding back an output produced from a tape speed sensor to thereby control the rotation of a tape, first signal generating means for generating a reference clock, second signal generating means for generating a plurality of control clocks different in frequency from one another from the output of the tape speed sensor, an A/D converter for A/D converting an input signal using the reference clock generated from the first signal generating means, a memory controller for controlling the A/D converted digital signal, a memory for storing the digital signal therein, a D/A converter for controlling the memory controller using the control clocks to thereby re-convert the digital signal into an analog signal, and a recording head for amplifying an output supplied from the D/A converter and thereafter writing the amplified output onto the recording tape, which comprises the following steps of:
detecting a tape end of the recording tape;
thereby temporarily storing the input signal in the memory or another memory until the surface of the tape is switched to another from the detection time and the speed of the tape is stabilized; and
reading the input signal therefrom after the tape speed has been stabilized and continuously recording the same on the recording tape.

It is preferable that each individual error signals produced from the tape speed sensor with respect to a reference wave are brought into data form and stored in a ROM memory, an antiphase wave of the data is time-based modulated based on a time base of a trigger signal outputted from a PG, and thereby each error signal is erased from an original signal outputted from the tape speed sensor to perform recording.

In the above invention, preferably, data about the error components stored in the ROM memory is typical data or approximate data for each production lot of the tape speed sensor.

In the capstanless tape recording apparatus (CL apparatus) according to the present invention, error components such as a tape speed or the like can be canceled each other by recording a recording signal time-based modulated according to the error components on a recording tape where the tape speed of the recording tape varies or wow and flutter occurs. Therefore, the signal can be written on the recording tape being running at a constant speed in a state which remains the same as a state in which it is being directly recorded on the recording tape.

Although each individual control clocks generated from the second signal generating means are time-base modulated based on error components detected by a TSS, these control clocks may preferably follow a TSS signal outputted from the TSS faithfully at all times. The more the degree of their follow-up increases, the more the recording accuracy of the present CL apparatus can improved. Thus, the degree of follow-up of each individual control clocks can be enhanced by increasing the detected frequency of the TSS signal itself. When the detected frequency of the TSS signal is limited (to about 1KHz) by the tape speed and the size of the TSS or the like, a signal shaper performs multiplication on the TSS signal upon converting the TSS signal into a pulse signal to thereby substantially increase the detected frequency of the TSS signal itself, whereby the recording accuracy can be improved.

Further, an error signal held by the TSS itself is also contained in the TSS signal. However, this error signal has an FG variation inherent in a given reference wave for each TSS. Therefore, a ROM memory is provided within a TBM circuit and the error components are brought into data form, followed by storage in the ROM memory. Further, an antiphase wave of the data read from the ROM memory is time-base modulated based on an output produced from a PG of the TSS. As a result, the error signal is erased so that the recording accuracy can be improved. By storing the error components recorded in the ROM memory, e.g., typical data about TSS's error components measured every production lot units or approximate data or the like in the ROM memory, the TSS's error components can be approximately eliminated. Therefore, the recording accuracy can be improved.

Embodiments of the invention will now be described, by way of example only, with reference to the accompanying drawings, in which;
Fig. 1 is a diagram showing a configuration of a control circuit (TBM circuit) of a capstanless tape recording apparatus according to the present invention;
Fig. 2 illustrates waveform shaping in which a pulse signal is generated from a TSS signal, wherein Fig. 2A is a diagram showing the TSS signal, Fig. 2B is a diagram illustrating waveform shaping performed by a normal method, Fig. 2C is a diagram depicting waveform shaping performed by multiplication, and Fig. 2D is a diagram showing waveform shaping performed by pseudo multiplication;
Fig. 3 is a diagram showing a part of the TBM circuit shown in Fig. 1 as another configuration; and
Fig. 4 is a diagram illustrating a configuration of a conventional capstanless tape apparatus.

The present invention will hereinafter be described with reference to the accompanying drawings.

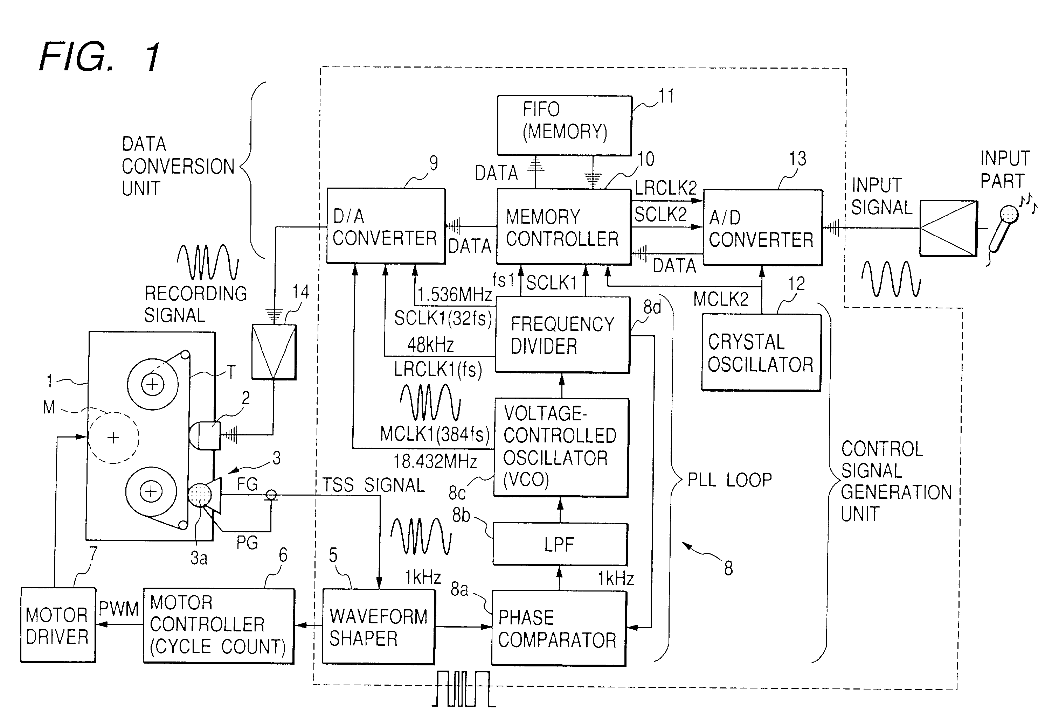

Fig. 1 is a block diagram showing a control circuit (hereinafter called "TBM (Time Base Modulation) circuit") of a capstanless tape recording apparatus (hereinafter called "CL apparatus") of the present invention.

The CL apparatus 1 is mounted on various NC machines, for example and used for recording control data (digital signal) on the NC machines. Alternatively, the CL apparatus 1 is installed in a normal DAT and used for recording an audio signal (analog signal) or the like.

The CL apparatus 1 is provided with a recording head 2 for recording data on a recording tape T. Further, a TSS (Tape Speed Sensor) 3 for detecting the feeding speed of the recording tape T in place of the no-use of a capstan is provided at a position adjacent to the recording head 2.

The recording head 2 and the TSS 3 are driven inside the CL apparatus 1 in a state of being kept in contact with each other. As the TSS 3, for example, one is used which has a rotor 3a rotated according to the feeding operation of the recording tape T and is provided with a pulse generator PG or frequency generator FG or the like for measuring the rotation of the rotor 3a by an optical or magnetic method. A signal (hereinafter called "TSS signal") outputted from the TSS 3 is electrically coupled to a waveform shaper 5. An output produced from the waveform shaper 5 is coupled to a motor controller 6 and a motor driver 7 and a reel drive motor M, which constitute a motor servo system.

The TBM circuit comprises a data conversion unit and a control signal generation unit to supply a recording signal most suited to the writing of an audio signal or a control data signal (hereinafter called "input signal") inputted from an input unit or part by the recording head 2. Namely, the data conversion unit consists of an A/D converter 13, a memory controller 10, a D/A converter 9 and an FIFO (First In First Out buffer) : first-in-first-out memory) 11. The data conversion unit supplies the output of the D/A converter 9 to the recording head 2 through an amplifier 14. On the other hand, the control signal generation unit consists of first signal generating means and second signal generating means. The first signal generating means is made up of a crystal oscillator 12 or the like for generating a reference clock normal and high in clock accuracy. The second signal generating means comprises a PLL loop comprised of a phase comparator 8a, an LPF (Low-Pass Filter) 8b, a voltage-controlled oscillator (VCO) 8c and a frequency divider 8d. One control clock signal (1KHz) obtained by dividing a signal generated from the voltage-controlled oscillator 8c with the frequency divider 8d is fed back to the phase comparator 8a.

Various control signals for the TBM circuit constructed in the above-described manner will be described.

When the recording tape T is forwarded in the CL apparatus 1, the rotor 3a mounted to the TSS 3 is rotated according to the running of the recording tape T. With its rotation, an envelope signal (hereinafter called "TSS signal") including information about the speed, the angular velocity, etc. is detected from the TSS 3. The TSS signal is inputted to the waveform shaper 5, where, for example, a comparator or the like is provided to identify 0 and 1 at a middle point of a waveform, whereby the TSS signal is converted into a digital pulse signal (hereinafter called "pulse signal"). The TSS signal converted into the pulse signal is inputted to the phase comparator 8a provided in the first stage of the PLL loop 8. The phase comparator 8a draws a comparison between the pulse signal (TSS signal: 1KHz) and the signal (1KHz) fed back from the frequency divider 8d and generates a comparison voltage corresponding to the difference therebetween. Only a necessary frequency component is extracted from the output of the phase comparator 8a through the LPF 8b and thereafter supplied to the voltage-controlled oscillator 8c as a control voltage. The voltage-controlled oscillator 8c brings PLL into a locked state simultaneously with the input of the TSS signal to the phase comparator 8a, i.e., generates a predetermined master clock signal (18.432MHz, 348fs) (hereinafter called "MCLK1 signal") allowed to coincide with the phase of the TSS signal. However, since the MCLK1 signal is phase-locked based on the TSS signal inputted to the phase comparator 8a, it serves as a control clock which is unstable and always time-axis or-base modulated while following a variation in TSS signal.

Further, the output signal of the voltage-controlled oscillator 8c is inputted to the frequency divider 8d and the D/A converter 9. The frequency divider 8d generates control clocks such as an LRCLK1 (48KHz, fs), an SCLK1 (1.536MHz, 32fs) and a feedback signal (1KHz) or the like, which are inputted to the D/A converter 9 and the memory controller 10. The MCLK1 serves as a control clock signal for activating or operating the D/A converter 9 itself and the LRCLK1 corresponds to a sampling frequency of a sampling signal at the A/D converter 13 to be described later and serves as a time-base setting reference signal D/A converted by the D/A converter 9. Further, the SCLK1 serves as a clock for controlling a data bit length of an input signal D/A converted by the D/A converter 9. Since it needs 32 times the LRCLK1, the frequency of the SCLK1 is set to 1.536MHz.

Incidentally, the control clocks such as these LRCLK1 and SCLK1 and the feedback signal or the like function or operate so as to follow the output of the TSS signal faithfully in a manner similar to the MCLK1 signal. Namely, since the TSS signal contains error components produced due to a variation such as wow and flutter produced upon the running of a tape, each control clock referred to above results in a time-base modulated one including the error components.

On the other hand, a signal to be inputted to a recording circuit is introduced into the TBM circuit through the input part provided on the right side as seen in the drawing. When the input signal is an analog signal, it is first converted into a digital signal by the A/D converter 13. At this time, however, its conversion is performed based on the first signal generating means. An MCLK2 generated from the first signal generating means (crystal oscillator) has an oscillation frequency of 18.432MHz in a manner similar to the above-described master clock signal MCLK1.

Further, the MCLK2 is supplied to the memory controller 10 and frequency-divided by an unillustrated frequency divider provided within the memory controller 10. This frequency divider generates oscillation frequencies similar to the LRCLK1 and SCLK1, which are respectively inputted to the A/D converter 13 as an LRCLK2 and an SCLK2. Incidentally, the MCLK2 is used as a clock signal for controlling the operation of the A/D converter 13 itself, whereas the LRCLK2 is a sampling signal for sampling the input signal at the A/D converter 13.

Further, the SCLK2 is a clock for controlling a data bit length of the input signal A/D converted by the A/D converter 13. Since it needs 32 times the sampling signal, the frequency of the clock is set to 1.536MHz. However, the MCLK2 is generated based on the crystal oscillator 12 corresponding to the first signal generating means and is not time-base modulated while responding to or following the TSS signal as in the case of the MCLK1. Therefore, the MCLK2 is used as an absolute reference clock signal highest in reliability in the TBM circuit (MCLK2 will hereinafter be called "normal reference signal"). Further, the LRCLK2 and SCLK2 obtained by dividing the normal reference signal MCLK2 also result in a high-accuracy clock signal in the same manner as described above.

A method of controlling the TBM circuit will hereinafter be explained.

A TSS signal obtained from the TSS 3 and pulsated by the waveform shaper 5 is inputted to the motor controller 6. The motor controller 6 is provided with an unillustrated pulse counter, which counts a predetermined number of pulses to thereby perform PWM control. The PWM-controlled signal is fed back to the reel drive motor M through the motor driver 7. However, the reel drive motor M is driven so that the output frequency of the TSS 3 reaches 1KHz, for example, thereby controlling the tape speed.

A signal inputted from the input part is inputted to the AD converter 13. The A/D converter 13 is activated in response to the normal reference clock MCLK2 to sample the input signal in accordance with an LRCLK2 (48KHz) corresponding to its frequency-divided signal, thereby converting the input signal into a digital signal (where the A/D converted input signal will hereinafter be called ┌data signal┘ ). The data signal converted hereat is produced based on a regular time base and supplied to the memory controller 10 from which it is supplied to the D/A controller 9 via the memory controller 10. The D/A converter 9 obtains the data signal directly from the A/D converter 13 based on instructions issued from the memory converter 10 and sequentially D/A converts it to perform re-conversion to a recording signal.

However, the signal conversion of the D/A converter is performed based on control clocks such as an MCLOK1, LRCLOK1 and SCLOK1 generated by the PLL loop, i.e., the second signal generating means without based on the signal such as the normal reference signal MCLK2 or the like generated by the first signal generating means. Namely, since each control clock generated by the second signal generating means follows an error signal such as wow and flutter or the like contained in the TSS signal and time-base modulated as mentioned above, there may be a case in which each control clock causes a lag or lead on a time base as compared with the normal reference clock generated by the first signal generating means. Since the A/D conversion of the A/D converter 13 is performed prior to the D/A conversion in this case, a post-conversion data signal is suitably stored in the FIFO 11.

Thus, when the data signal is stored in the FIFO 11, the D/A converter 9 preferentially D/A-converts the data signal of the FIFO 11. During that period, the data signal converted by the A/D converter 13 is controlled by the memory converter 10 so as to be sequentially stored in the FIFO 11. A recording signal converted into an analog signal by the D/A converter 9 is amplified to a predetermined signal level by the amplifier 14, after which it is recorded on the recording tape T through the recording head 2.

The memory controller 10 checks for the amount of the data signal whenever necessary. Supposing that the amount of the data signal is expected to exceed the capacity of the FIFO 11, an overlimit signal is outputted to the motor controller 6 in advance to thereby control the tape speed within a range in which the data signal does not cause a memory flow, together with the TSS signal.

Thus, the signal (analog signal) inputted to the input unit or part is converted into the data signal (digital signal) by the A/D converter 13, followed by re-conversion to the recording signal (analog signal) by the D/A converter 9. However, the error signal of the TSS signal is contained in the post-conversion recording signal during that time. Namely, the error signal produced while the recording tape T is running, can be included in the input signal such as the audio signal or the like inputted from the outside.

Thus, the post-conversion recording signal will result in one in which the error components are absolutely canceled each other on the recording tape T which runs with the error components included therein. Thus, since the recording signal can be controlled according to the running state of the recording tape T, it can be recorded on the tape without being affected by mechanical speed variations of the CL apparatus 1. As a result, the capstanless CL apparatus 1 referred to above can be improved in recording accuracy.

On the other hand, when the input signal is a digital signal, it is directly inputted to the memory controller 10 through a digital signal processor in place of the A/D converter 13. The digital signal processor performs a correction for bringing, for example, a digital signal different in transfer rate from the digital signal into agreement with the same frequency as that for each control clock lying within the TBM circuit by the normal crystal oscillator. The so-corrected digital signal is inputted to the memory controller 10, which further receives a control signal outputted from the PLL loop in the same manner as described above and performs a time-base modulating process inclusive of the error components on the TSS 3 side. However, no D/A conversion is done and the modulated digital signal is recorded on the recording tape as it is.

Since the time base of the data signal is modulated according to a variation in the tape speed upon digital signal recording, the signal recorded on the recording tape T can be processed in a manner similar to where it is recorded upon an ideal constant tape speed. Thus, since one does not need to be conscious of mechanical tape speed control, the digital signal can be accurately recorded on the recording tape even if the CL apparatus 1 is low in mechanical accuracy. Since the recording tape that has recorded the signal thereon by using the CL apparatus 1, becomes extremely high in accuracy upon recording, it can be used as a master tape. Further, the CL apparatus 1 is excellent in compatibility with other CL apparatus or a capstan-controlled apparatus.

To avoid or prevent the second problem, for example, a tape end of a recording tape T is detected and a data signal corresponding to a time lag is temporarily stored in the FIFO 11. If the data signal stored on the FIFO 11 is read after the surface of the recording tape T has been switched to another and the tape speed has been stabilized, then the input signal can be prevented from missing.

Incidentally, the tape end can be detected from a tape length or ABS time or the like when the input signal is of a digital signal, for example. On the other hand, when the input signal is of an analog signal, there is known, for example, a method of adding up or integrating reel pulse outputs for detecting the number of rotations of a supply reel for the recording tape T or/and a take-up reel, by using a counter or a method of allowing a user to input a tape length (the type of tape) and measuring a recording time based on the tape length. Further, a method of utilizing a quick sensor or the like for detecting the tape end may be used.

To solve the aforementioned third problem, there is known a method of discontinuing the sending of a recording signal to the recording head 2 until, for example, a TSS signal is detected and the output is stabilized, i.e., the tape speed is stabilized. The data signal can be read from the FIFO 11 and recorded on the recording tape after the data signal is stored in the FIFO 11 and the tape speed is stabilized as described above. Alternatively, a CL apparatus may be used wherein a buffer memory is provided between the D/A converter 9 and the amplifier 14. Thus, since no recording is made to the recording tape T until the servo system of the motor M of the CL apparatus 1 functions and the tape speed is stabilized, a problem that a recording non-insurance portion is formed upon startup, can be avoided.

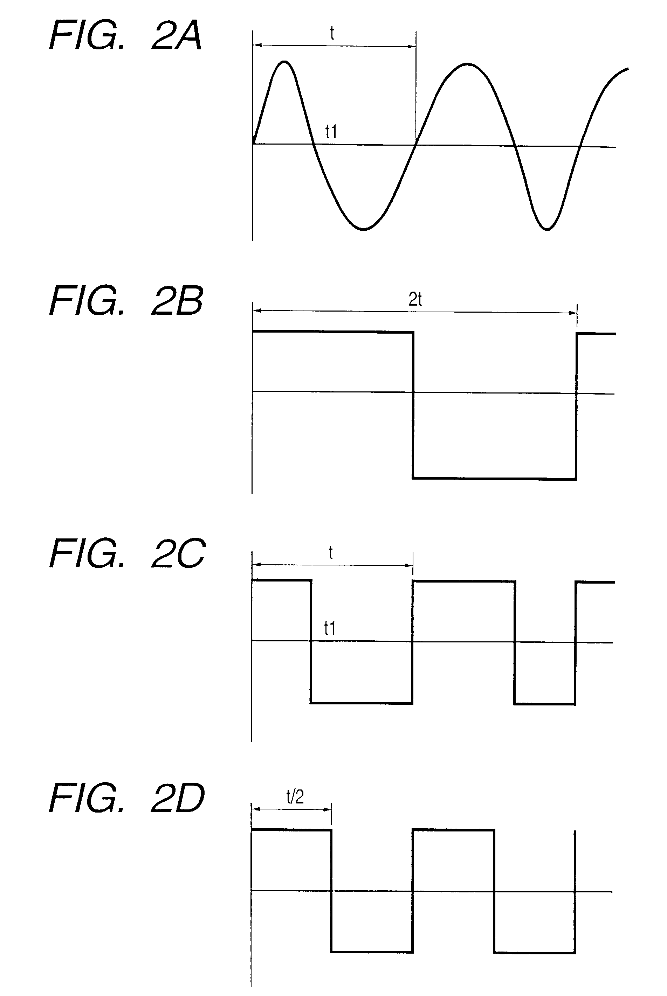

Further, for example, a method shown below is known as means for solving the fourth problem. Fig. 2 is a timing chart obtained where a TSS signal is converted into each pulse signal, wherein Fig. 2A is a diagram showing the TSS signal, Fig. 2B is a diagram illustrating waveform shaping performed by a normal method, Fig. 2C is a diagram depicting waveform shaping performed by multiplication, and Fig. 2D is a diagram showing waveform shaping performed by pseudo multiplication, respectively.

As described above, the TSS signal and the feedback signal compared by the phase comparator 8a are 1KHz each other and the comparison voltage corresponding to the difference therebetween is outputted and supplied to the voltage-controlled oscillator 8c, followed by being driven into phase lock. At this time, the waveform shaping of the TSS signal as shown in Figs. 2A and 2B is normally performed for each cycle t of the TSS signal with the most easy-to-detect portion (the rising of the signal in the present example) as the reference. The cycle of the pulse signal is set to 2t.

However, since such a low frequency (comparison frequency) cannot respond to a variation in the tape speed of the actual CL apparatus 1, the CL apparatus 1 has finally limitations on the capability of reducing wow and flutter and is hard to be mounted on a high-grade apparatus.

Therefore, even the falling time t1 of the TSS signal is defined as the reference and the pulse signal is brought into multiplication, as shown in Fig. 2C by way of example. As a result, the frequency of a feedback signal in the second signal generating means (PLL loop) can be increased. Further, since the pulse signal is formed in synchronism with the phase of the TSS signal, the TSS signal is converted into the pulse signal following the TSS signal more faithfully. Therefore, respective control clocks, which allow an improvement in the degree of follow-up of a running recording tape with respect to an error signal, can be outputted from the second signal generating means, whereby the reducing capability of wow and flutter can be improved.

Since the accurate multiplication of the TSS signal originally needs to generate an accurate TSS signal from the TSS 3, i.e., form the TSS 3 itself with high accuracy, the manufacturing cost for the formation of the TSS 3 increases. Thus, if the time t required for the TSS signal to change from the first rising edge thereof to the next rising edge thereof as shown in Fig. 2D is measured and forcibly divided into two (subjected to equal division on a pseudo basis) t/2 and the pulse signal is subjected to multiplication while, for example, the waveform shaping of the TSS signal is being performed by the conventional method shown in Figs. 2A and 2B, the reducing capability of wow and flutter can be improved in the same manner as described above. Namely, the processing capability or throughput of the TBM circuit can be improved by subjecting the signal outputted from the waveform shaper to multiplication while reducing the manufacturing cost of the TSS 3. Finally, the CL apparatus 1 can be made excellent in recording accuracy.

Further, error signal components are contained even in the tape speed sensor (TSS 3) itself. The error components are outputted each time the rotor 3a rotates. However, since the TSS 3 has a feature that the error components outputted each time the rotor 3a rotates, are substantially constant, the error signal components can be removed by using its feature. Namely, since each TSS 3 has an FG variation inherent in a reference wave, it is converted into data form and stored in a ROM memory provided within the TBM circuit, and a time measurement is made to the signal outputted from the PG of the TSS 3 in the same manner as described above. Wow and flutter can be removed by performing time-base modulation on an antiphase wave of the data, based on the calculation of a rotational frequency of the TSS 3.

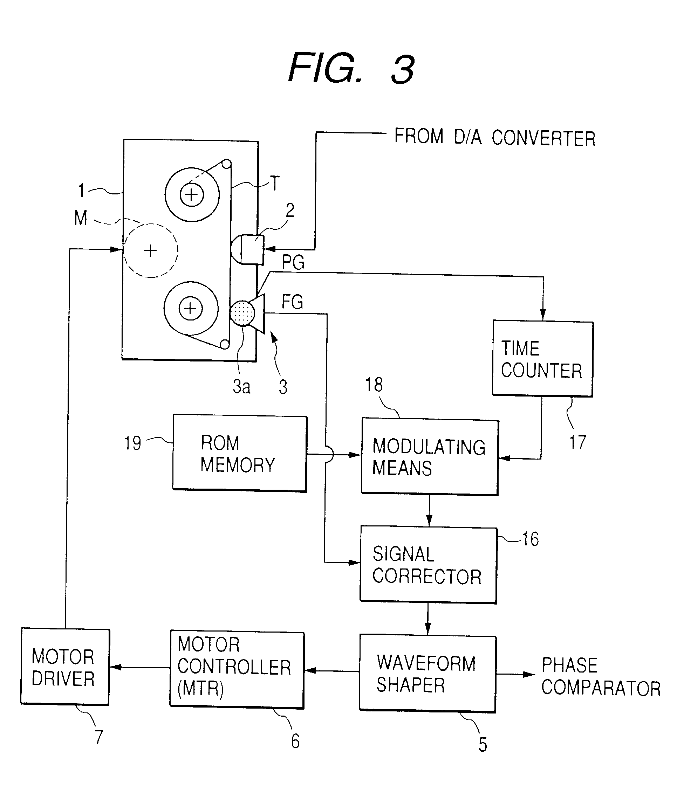

Further, the above-described TSS 3 is characterized in that each individual tape speed sensors (TSS) having the same error components are produced in lot units. Thus, the error components of the TSS 3 can be removed approximately by using means shown in Fig. 3, for example. Fig. 3 is a diagram showing another configuration of a part of the TBM circuit shown in Fig. 1.

A ROM memory 19 in which typical data about error components of a TSS 3 measured in each lot unit or approximate data and the like have been stored, is provided within the TBM circuit. The data about the error component signal of the TSS 3 from the ROM memory 19 is coupled to modulating means 18 and a trigger signal outputted from the PG is coupled to the modulating means 18 through time-base measuring means 17. The data outputted from the ROM memory 19 is established for synchronization by the trigger signal so that a time-base modulated signal is produced from the modulating means 18. On the other hand, a TSS signal detected by the FG is inputted to a signal corrector 16 where it is corrected based on the signal time-base modulated by the modulating means 18, whereby the error components of the TSS 3 can be approximately eliminated in the same manner as described above.

The TBM circuit shown in Fig. 2 sequentially performs a recognizing process on the output of the PG while measuring or detecting it to thereby correct the recording signal, whereas the TMB circuit shown in Fig. 3 can correct a signal, based on the data stored in the ROM memory 19 in advance.

The contents stored in the ROM memory 19 may be one obtained by detecting a TSS signal at the initial tape running, for example, plural times and averaging them. It is therefore possible to remove the error components of the TSS 3 more accurately.

Thus, since the error signal included in the TSS signal can be removed under any conditions, i.e., it can be initialized (subjected to calibration), the TSS signal can be improved in reliability. It is therefore possible to provide a recording apparatus high in accuracy.

A circuit (TBC (Time Base Control)) for controlling a capstanless tape playback or reproducing apparatus can be configured by using a playback or reproducing head in place of the recording head 2 provided within the CL apparatus and exchanging the D/A converter 9 with the A/D converter 13. In an CL apparatus equipped with the TBC circuit, an analog signal reproduced by the reproducing head is digitally-processed in the TBC circuit. Thus, the time interval (of about 4 seconds in the prior art) required to perform a so-called blank search for searching and finding out the interval between the signals conventionally recorded on the recording tape T can be shortened without a reduction in recognition rate of the blank search.

According to the present invention, as has been described above in detail, high-accuracy recording can be achieved which allows a reduction in the influences such as a variation in tape speed, wow and flutter, etc.

Since it is unnecessary to take into consideration finished accuracy and assembly accuracy of each structural member, an inexpensive capstanless tape recording apparatus reduced in manufacturing cost can be obtained.

While the present invention has been described with reference to the illustrative embodiment, this description is not intended to be construed in a limiting sense. Various modifications of the illustrative embodiment will be apparent to those skilled in the art on reference to this description. It is therefore contemplated that the appended claims will cover any such modifications or embodiments as fall within the true scope of the invention.

## Claims

1. A capstanless tape recording apparatus having a servo system of a motor for feeding back an output produced from a tape speed sensor to thereby control the rotation of a tape, comprising:
first signal generating means for generating a reference clock;
second signal generating means for generating a plurality of control clocks different in frequency from one another from the output of said tape speed sensor;
an A/D converter for A/D converting an input signal using the reference clock generated from said first signal generating means;
a memory controller for controlling the A/D converted digital signal;
a memory for storing the digital signal therein;
a D/A converter for controlling said memory controller using said control clocks to thereby re-convert the digital signal into an analog signal; and
a recording head for amplifying an output supplied from said D/A converter and thereafter writing the amplified output onto the recording tape.

2. A capstanless tape recording apparatus according to claim 1, wherein the signal outputted from said tape speed sensor is subjected to multiplication to thereby generate control clocks from said second signal generating means.

3. A recording method using a capstanless tape recording apparatus according to claim 1, wherein the control clocks generated from said second signal generating means are time-base modulated according to a variation in the speed of the tape, and when the input signal is re-converted into an analog signal using the control clocks after the A/D conversion of the input signal by using the reference clock, the input signal is time-base modulated according to error components produced upon running of the tape and thereafter recorded on the recording tape.

4. A recording method using a capstanless tape recording apparatus according to claim 3, wherein a digital signal processor is used in place of said D/A converter so that a digital signal is time-base modulated based on control clocks generated by said second signal generating means and thereafter recorded on the recording tape.

5. A recording method using a capstanless tape recording apparatus according to claim 1, having a servo system of a motor for feeding back an output produced from a tape speed sensor to thereby control the rotation of a tape, first signal generating means for generating a reference clock, second signal generating means for generating a plurality of control clocks different in frequency from one another from the output of said tape speed sensor, an A/D converter for A/D converting an input signal using the reference clock generated from said first signal generating means, a memory controller for controlling the A/D converted digital signal, a memory for storing the digital signal therein, a D/A converter for controlling said memory controller using said control clocks to thereby re-convert the digital signal into an analog signal, and a recording head for amplifying an output supplied from said D/A converter and thereafter writing the amplified output onto the recording tape, which comprises the following steps of:
detecting a tape end of the recording tape;
thereby temporarily storing the input signal in said memory or another memory until the surface of the tape is switched to another from the detection time and the speed of the tape is stabilized; and
reading the input signal therefrom after the tape speed has been stabilized and continuously recording the same on the recording tape.

6. A recording method using a capstanless tape recording apparatus according to claim 1, further comprising the steps of bringing each individual error signals produced from the tape speed sensor with respect to a reference wave into data form and storing the same in a ROM memory;
time-base modulating an antiphase wave of the data, based on a time base of a trigger signal outputted from a PG; and
thereby erasing each error signal from an original signal outputted from said tape speed sensor and recording the same on the recording tape.

7. A recording method according to claim 6, using a capstanless tape recording apparatus wherein data about the error components stored in the ROM memory is typical data or approximate data for each production lot of the tape speed sensor.
